# EUROPÄISCHE PATENTANMELDUNG

(11) **EP 1 354 686 A1**
(43) Veröffentlichungstag der Anmeldung: **22.10.2003**
(21) Anmeldenummer: 03008642.5
(22) Anmeldetag: 15.04.2003
(51) Int. Cl.: B29C 45/14, G06K 19/077

(54) **Spritzgussverfahren zur Herstellung einer Chipkarte und nach diesem Verfahren hergestellte Chipkarte**

(30) Priorität: 15.04.2002 DE 10216652
(71) Anmelder: Orga Kartensysteme GmbH, 33104 Paderborn (DE)
(72) Erfinder: Zander, Jörg, 23909 Ratzeburg (DE); Dohse, Stefan, 23623 Ahrensberg (DE)

(57) **Zusammenfassung**

Es wird ein Spritzgussverfahren zur Herstellung einer Chipkarte, welche einen Kunststoffkartenkörper und mindestens eine mit einem oder mehreren elektronischen Bauelementen (2, 3) versehene, in den Kartenkörper eingebettete Trägerschicht (1) aufweist, vorgestellt, bei der neben den üblichen Verfahrensschritten im Rahmen des Spritzgussverfahrens erfindungsgemäß die Trägerschicht (1) mit den darauf platzierten elektronischen Bauelementen (2, 3) vor dem Einlegen in das Spritzgusswerkzeug (7) wenigstens an der mit den Bauelementen (2, 3) versehenen Flachseite mindestens im Bereich dieser Bauelemente mit einer hochelastischen Abdeckschicht (4a, 4b, 4c) vorzugsweise aus einem auf Kautschuk basierenden Schmelzkleber versehen wird.

Durch die Abdeckschicht (4a, 4b, 4c) können sowohl während des Spritzgießvorganges auftretende Scherkräfte als auch Biege- und Torsionskräfte während der Benutzung der Chipkarte absorbiert werden.

## Beschreibung

Die vorliegende Erfindung betrifft ein Spritzgussverfahren zur Herstellung einer Chipkarte und befasst sich weiterhin mit einer nach dem erfindungsgemäßen Verfahren hergestellten Chipkarte gemäß den Gattungsbegriffen der unabhängigen Ansprüche.

Chipkarten oder auch Sim- bzw. Smart-Cards werden in zunehmendem Maße beispielsweise als Bankkarten für den bargeldlosen Zahlungsverkehr, als Zugangsberechtigungskarten für abgesicherte Bereiche sowie auch als Kunden- bzw. Rabattkarten eingesetzt.

Derartige Chipkarten bestehen aus Kunststoff, wobei innerhalb der Chipkarte unter Umständen verschiedene elektronische Bauelemente enthalten sind. Diese elektronischen Bauelemente können beispielsweise Informationsdatenspeicher wie Mikrochips oder Magnetstreifen sein, darüber hinaus sind ergänzende Bauteile wie Batterien, Spulen usw. denkbar, welche auf einer in den Kartenkörper eingebetteten Trägerschicht angeordnet und miteinander verbunden sind. Auf den Informationsdatenspeichern sind kartenrelevante Daten abgelegt und durch entsprechende Lesegeräte abrufbar.

Die Herstellung derartiger Chipkarten erfolgt gemäss einer bekannten Variante mit Hilfe des Spritzgussverfahrens, bei dem ein aus zwei Werkzeughälften bestehendes Spritzgusswerkzeug mit einer innenliegenden, die Form der fertigen Chipkarten bildenden Kavität mit flüssigem Kunststoff gefüllt wird, welches nach dem Erkalten den fertigen Spritzgusskörper bildet.

Bei den im Spritzgussverfahren hergestellten Chipkarten besteht allgemein der Nachteil, dass das Einspritzen des verflüssigten Kunststoffes unter erheblichem Druck erfolgt, so dass die Oberflächen der innerhalb der Kavität auf der Trägerschicht angeordneten elektronischen Bauelemente während des Spritzgiessvorganges durch starke Scherkräfte, welche durch die vorbeifließende Kunststoffmasse verursacht werden, beansprucht sind.

Darüber hinaus sind Chipkarten mit relativ großformatigen Bauelementen wie Batterien oder Akkus während ihrer Verwendung fast ständig größeren mechanischen Belastungen ausgesetzt. So werden beispielsweise Chipkarten, die in Gesäßtaschen von Hosen unterbebracht sind, sowohl Biegungs- als auch Torsionskräften ausgesetzt. Bei Chipkarten, deren einziges integriertes Bauteil ein Chipmodul ist, sind derartige mechanische Beanspruchungen in der Regel unkritisch. Andere großformatigere Bauteile sind dagegen mechanisch verwundbarer, da sie durch ihre Größe der Verformung des Kartenkörpers folgen müssen.

Aufgabe der vorliegenden Erfindung ist es daher, ein Spritzgussverfahren zur Herstellung einer Chipkarte, die einen Kunststoffkartenkörper und mindestens eine mit einem oder mehreren elektronischen Bauelementen versehene in den Kartenkörper eingebettete Trägerschicht aufweist, bereitzustellen, bei der zum einen während des Herstellprozesses die beim Spritzgussverfahren auftretenden Scherkräfte ohne negativen Einfluss auf die Funktionsfähigkeit der elektronischen Bauelemente bleiben. Darüberhinaus sollen Vorkehrungen getroffen werden, bei späterer Verwendung derartiger Chipkarten die dann auftretenden mechanischen Beanspruchungen kompensieren zu können.

Die erfindungsgemäße technische Lehre zur Lösung der angesprochenen Problematiken sieht dabei vor, dass zunächst in einem gesonderten Verfahrensschritt die Platzierung und die mechanische sowie elektrische Verbindung der elektronischen Bauelemente mit der Trägerschicht an mindestens einer ihrer den elektronischen Bauelementen zugewandten Flachseite erfolgt. Dieser Verfahrensschritt kann mit üblichen dem Fachmann bekannten Techniken erfolgen.

Vor dem daran anschließenden Einlegen der vorbereiteten Trägerschicht in eine zur Herstellung der Chipkarte vorgesehene Spritzgussform, welche mit zwei Werkzeughälften und einer innerhalb der Werkzeughälften befindlichen, die Form der fertigen Chipkarte bildenden Werkzeugkavität versehen ist, wird als erfindungswesentlicher Verfahrensschritt die Trägerschicht mit den darauf platzierten elektronischen Bauelementen wenigstens an der mit den Bauelementen versehenen Flachseite mindestens im Bereich dieser Bauelemente mit einer hochelastischen Abdeckschicht versehen.

Anschließend wird das herkömmliche Spritzgussverfahren durch das Schließen der beiden Werkzeughälften der Spritzgussform und die anschließende Zuführung eines verflüssigten Kunststoffes in die Kavität der Spritzgussform zur Bildung des Kartenkörpers vorgenommen.

Durch die Bedeckung der elektronischen Bauelemente mit einer hochelastischen Abdeckschicht entsteht ein mechanischer Aufbau von im Spritzgussverfahren gefertigten Chipkarten, bei der insbesondere großformatige elektronische Bauelemente im Innern des Chipkartenkörpers hohe von außen aufgebrachte Biege- und Torsionsbelastungen aufnehmen können, so dass deren Funktion während der normalen Verwendung der Chipkarten nicht beeinträchtigt wird. Darüber hinaus sind insbesondere die großformatigen Bauelemente während des Eindrückens der Kunststoffschmelze in die Spritzgussform vor Scherkräften geschützt, da die hochelastische Abdeckschicht diese absorbiert.

Mit Hilfe des erfindungsgemäßen Verfahrens entsteht somit eine Chipkarte, bei der zum einen während des Herstellvorganges eine weitaus niedrigere Ausschussrate produziert wird, und die andererseits auch hohen mechanischen Beanspruchungen problemlos widerstehen kann.

In den zugeordneten Unteransprüchen sind spezielle Ausgestaltungsmerkmale des erfindungsgemäßen Spritzgussverfahrens sowie der durch dieses Verfahren hergestellten Chipkarte ergänzend beschrieben.

Es hat sich insbesondere als vorteilhaft gezeigt, die hochelastische Abdeckschicht zusätzlich an der mit den elektronischen Bauelementen versehenen Flachseite der Trägerschicht vor dem Einlegen in das Spritzgusswerkzeug auch an der den Bauelementen abgewandten Flachseite aufzutragen. Durch diese zusätzliche Maßnahme werden die elektronischen Bauelemente als auch die Trägerschicht selbst vor mechanischen Belastungen in Folge des Spritzgussverfahrens als auch in Folge späterer Verwendungen der Chipkarte geschützt.

Für den eigentlichen Beschichtungsvorgang der elektronischen Bauelemente sowie der Trägerschicht haben sich verschiedene Möglichkeiten als vorteilhafte Realisierung ergeben. So lässt sich die hochelastische Abdeckschicht auf der Trägerschicht durch einen Tauchvorgang aufbringen, bei dem die Trägerschicht durch eine geeignete Vorrichtung gehalten, in ein aus dem hochelastischen Abdeckschichtmaterial bestehendes Bad eingetaucht und beschichtet wird. Diese Anwendung kann sowohl bei einseitiger Beschichtung nur auf der Seite der Bauelemente der Trägerschicht als auch bei beidseitiger Abdeckung der Trägerschicht mit dem hochelastischen Abdeckschichtmaterial angewendet werden.

Alternative Möglichkeiten des Aufbringens der hochelastischen Abdeckschicht bestehen darin, diese beispielsweise durch einen Rakelvorgang, durch einen Aufspritz/Aufsprühvorgang oder durch Aufgießen des hochelastischen Abdeckschichtmaterials auf die elektronischen Bauelemente bzw. auf die Trägerschicht vorzunehmen.

Als Abdeckschichtmaterial hat sich für alle Anwendungsfälle ein auf Kautschuk basierender Schmelzklebstoff als vorteilhaft erwiesen.

In den beigefügten Figuren wird in mehreren Ausführungsbeispielen der erfindungswesentliche Schritt des Spritzgussverfahrens zur Herstellung einer Chipkarte näher erläutert.

Es zeigen:
- Fig. 1A, 1B, 1C: das Ergebnis des erfindungswesentlichen Verfahrensschrittes in drei Ausführungsvarianten vor dem Einbringen der Trägerschicht mit den darauf angeordneten elektronischen Bauelementen in einer Spritzgussform und
- Fig. 2: die fertige Chipkarte unmittelbar nach Beendigung des Spritzgussvorganges in einer schematischen Querschnittdarstellung.

In den Teilfiguren 1A, 1B und 1C ist schematisch jeweils eine Trägerschicht 1 dargestellt, die aus einem dünnen elastischen Kunststofflabel bestehen kann, auf der in der Darstellung der Figuren beispielhaft zwei elektronische Bauelemente 2 bzw. 3 angeordnet sind. Die Bauelemente sind in geeigneter Weise auf der Trägerschicht 1 befestigt und gegebenenfalls untereinander mit Leiterbahnen verbunden, die der Übersichtlichkeit halber der Figurendarstellung nicht aufgeführt sind.

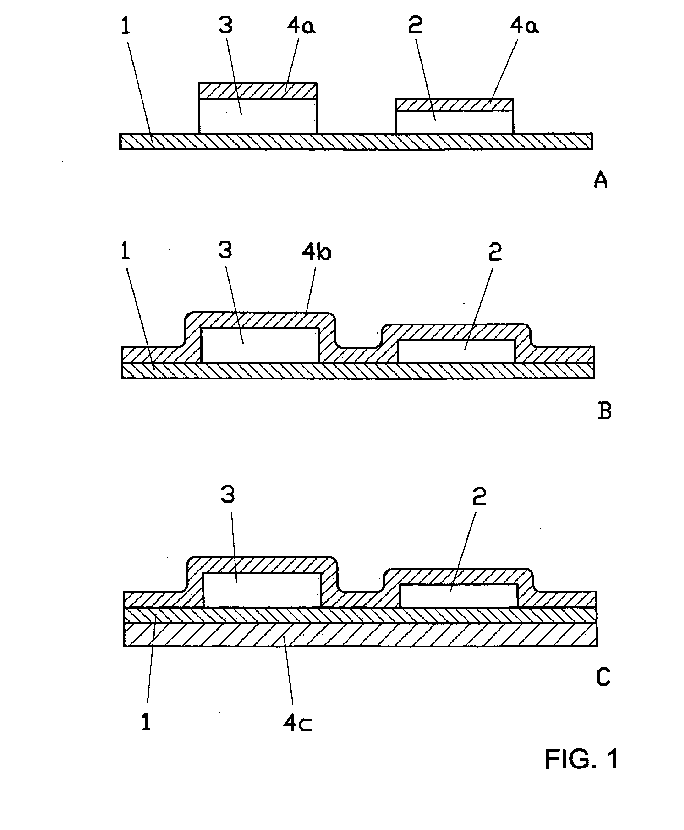

Erfindungsgemäß wird die Trägerschicht 1 mit den darauf angeordneten Bauelementen 2, 3 in einem zwischengeschalteten Verfahrensschritt vor dem Einbringen in eine Spritzgussform mit einer hochelastischen Abdeckschicht 4 versehen. Diese Abdeckschicht 4 kann entsprechend einer ersten Ausgestaltungsvariante nur an den der Trägerschicht 1 abgewandten Oberseiten der Bauelemente 2, 3 angeordnet werden. Um zusätzlich den Schutz der Trägerschicht während des Spritzgussvorganges als auch bei späteren mechanischen Belastungen der fertigen Chipkarte zu verbessern kann entsprechend der Ausgestaltungsvariante der Figur 1B die Abdeckschicht vollflächig auf der mit den Bauelementen 2, 3 versehenen Flachseite der Trägerschicht 1 aufgetragen werden.

Zusätzlich ist es möglich, zu der Abdeckschicht 4b der Darstellung 1B eine zusätzliche Abdeckschicht 4c an der der Bauelementflachseite abgewandten Unterseite der Trägerschicht 1 zu platzieren. Dieses entspricht der Darstellung der Figur 1C. Das Aufbringen der Abdeckschicht 4a, 4b bzw. 4c kann in einem Tauchbad erfolgen, darüber hinaus sind auch aus dem Stand der Technik an sich bekannte Rakelvorgänge oder das Aufspritzen/Aufsprühen oder Aufgießen der hochelastischen Abdeckschichten 4a, 4b, 4c für das erfindungsgemäße Verfahren möglich. Die Abdeckschichten bestehen zweckmäßigerweise aus einem auf Kautschuk basierendem Schmelzklebstoff, welcher durch Aufheizen verflüssigt wird und nach dem Auftragen auf die Trägerschicht 1 bzw. die Bauelemente 2, 3 durch Erkalten wieder aushärtet und dann einen zuverlässigen Schutz bietet.

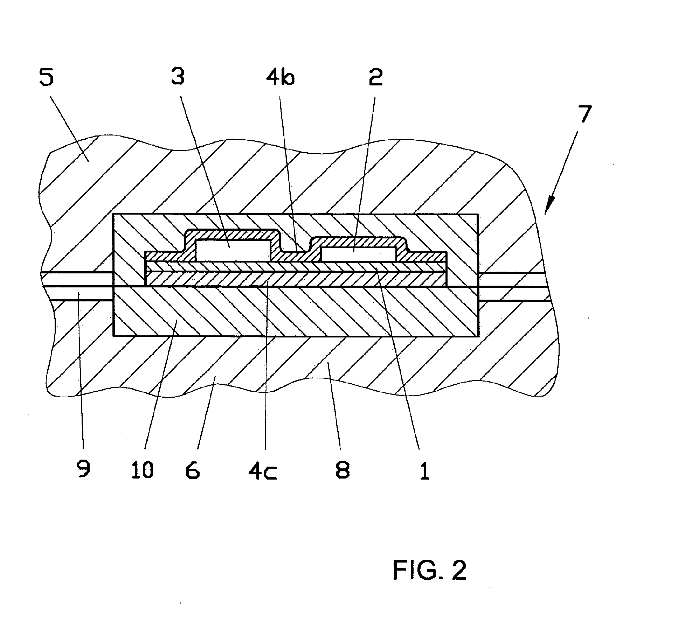

In der Figur 2 ist schematisch ein aus zwei Werkzeughälften 5 und 6 bestehendes Spritzgusswerkzeug 7 dargestellt. Innerhalb der Werkzeughälften 5, 6 befinden sich jeweils Vertiefungen, die eine gemeinsame Kavität in Form der durch Spritzguss herzustellenden Chipkarte 8 bilden. An einer Schmalseite des Spritzgusswerkzeuges 7 befindet sich ein Zuführkanal 9, durch den in das geschlossene Spritzgusswerkzeug verflüssigte Kunststoffschmelze eingepresst wird. Die Darstellung der Figur 2 zeigt die fertige Chipkarte 8 nach Beendigung des Zuführvorganges für die Kunststoffschmelze 10, welche den fertigen Kartenkörper bildet.

Wie aus der Figur 2 ersichtlich, ist innerhalb der Chipkarte 8 eine Trägerschicht 1 angeordnet, auf der analog der Darstellung der Figuren 1A bis 1C zwei Bauelemente 2, 3 angeordnet sind. Das aus der Trägerschicht und den Bauelementen bestehende Gesamtbauteil ist an seiner Ober- und Unterseite mit jeweils einer hochelastischen Abdeckschicht 4b bzw. 4c versehen. Durch die hochelastischen Abdeckschichten 4b und 4c können sowohl während des Spritzgussvorganges auftretende Scherkräfte an den Außenseiten des innerhalb des Spritzgusswerkzeuges platzierten Bauteiles abgefangen werden, die in Folge des Einspritzdruckes und der Einspritzgeschwindigkeit entstehen. Darüber hinaus ist die fertige Chipkarte 8 in der Lage, hohe Biegungs- und Torsionsbeanspruchungen zu verkraften, ohne dass die innenliegende Bauelemente 2, 3 und die Trägerschicht 1 beschädigt werden, da die Abdeckschichten 4b und 4c die auftretenden Kräfte in hohem Maße aufnehmen können.

### Bezugszeichenliste

- 1: Trägerschicht
- 2: elektronisches Bauelement
- 3: elektronisches Bauelement
- 4: Abdeckschicht
- 5: Werkzeughälfte
- 6: Werkzeughälfte
- 7: Spritzgusswerkzeug
- 8: Chipkarte
- 9: Zuführkanal
- 10: Kunststoffschmelze

## Patentansprüche

1. Spritzgussverfahren zur Herstellung einer Chipkarte (8), die einen Kunststoff-Kartenkörper und mindestens eine mit einem oder mehreren elektronischen Bauelementen (2, 3) versehene, in den Kartenkörper eingebettete Trägerschicht (1) aufweist, bei dem nacheinander folgende Verfahrensschritte durchgeführt werden:
- Platzierung der elektronischen Bauelemente (2, 3) auf der Trägerschicht (1) an mindestens einer ihrer den elektronischen Bauelementen (2, 3) zugewandten Flachseite und mechanische sowie elektrische Verbindung der Bauelemente untereinander sowie mit der Trägerschicht (1),
- Einlegen der vorbereiteten Trägerschicht (1) in ein zur Herstellung der Chipkarte (8) vorgesehenes Spritzgusswerkzeug (7) , welches mit zwei Werkzeughälften (5, 6) und einer innerhalb der Werkzeughälften (5, 6) befindlichen, die Form der fertigen Chipkarte (8) bildenden, Werkzeugkavität versehen ist, wobei die Trägerschicht (1) innerhalb des Spritzgusswerkzeuges (7) fixiert wird,
- Schließen der beiden Werkzeughälften (5, 6) der Spritzgussform
- Zuführung eines verflüssigten Kunststoffes in die Kavität der Spritzgussform zur Bildung des Kartenkörpers,
**dadurch gekennzeichnet, dass**
die Trägerschicht (1) mit den darauf platzierten elektronischen Bauelementen (2, 3) vor dem Einlegen in das Spritzgusswerkzeug (7) wenigstens an der mit den Bauelementen (2, 3) versehenen Flachseite mindestens im Bereich dieser Bauelemente (2, 3) mit einer hochelastischen Abdeckschicht (4 ) versehen wird.

2. Spritzgussverfahren nach Anspruch 1,
**dadurch gekennzeichnet, dass**
die Trägerschicht (1) mit den darauf platzierten elektronischen Bauelementen (2, 3) vor dem Einlegen in das Spritzgusswerkzeug (7) auch an der den Bauelementen (2, 3) abgewandten Flachseite mit einer hochelastischen Abdeckschicht (4) versehen wird.

3. Spritzgussverfahren nach einem der Ansprüche 1 oder 2,
**dadurch gekennzeichnet, dass**
die hochelastische Abdeckschicht (4) aus einem auf Kautschuk basierenden Schmelzklebstoff (10) besteht.

4. Spritzgussverfahren nach einem der Ansprüche 1 bis 3,
**dadurch gekennzeichnet, dass**
die hochelastische Abdeckschicht (4) auf der Trägerschicht (1) durch einen Tauchvorgang aufgebracht wird, bei dem die Trägerschicht (1), durch eine geeignete Vorrichtung gehalten, in ein aus dem hochelastischen Abdeckschichtmaterial bestehendes Bad eingetaucht und beschichtet wird.

5. Spritzgussverfahren nach einem der Ansprüche 1 bis 3,
**dadurch gekennzeichnet, dass**
die hochelastische Abdeckschicht (4) auf der Trägerschicht (1) durch einen Rakelvorgang aufgebracht wird.

6. Spritzgussverfahren nach einem der Ansprüche 1 bis 3,
**dadurch gekennzeichnet, dass**
die hochelastische Abdeckschicht (4) auf der Trägerschicht (1) durch einen Aufspritzvorgang aufgebracht wird.

7. Spritzgussverfahren nach einem der Ansprüche 1 bis 3,
**dadurch gekennzeichnet, dass**
die hochelastische Abdeckschicht (4) auf der Trägerschicht (1) durch einen Aufgießvorgang aufgebracht wird.

8. Chipkarte, die nach dem Spritzgussverfahren gemäß einem der Patentansprüche 1 bis 7 hergestellt ist, welche mindestens eine in einem Kunststoff-Kartenkörper eingebettete Trägerschicht (1) mit darauf mindestens an einer Flachseite angeordneten elektronischen Bauelementen (2, 3) aufweist
**dadurch gekennzeichnet, dass**
die Trägerschicht (1) mit den darauf platzierten elektronischen Bauelementen (2, 3) zumindest an der mit den Bauelementen versehenen Flachseite mindestens im Bereich dieser Bauelemente mit einer hochelastischen Abdeckschicht (4) versehen ist.

9. Chipkarte nach Anspruch 8,
**dadurch gekennzeichnet, dass**
die Trägerschicht (1) mit den darauf platzierten elektronischen Bauelementen (2, 3) auch an der den Bauelementen abgewandten Flachseite mit einer hochelastischen Abdeckschicht (4) versehen ist.

10. Chipkarte nach einem der Ansprüche 8 oder 9,
**dadurch gekennzeichnet, dass**
die hochelastische Abdeckschicht (4) ein auf Kautschuk basierender Schmelzklebstoff (10) ist.
